# EUROPÄISCHE PATENTANMELDUNG

(11) **EP 0 582 128 A1**
(43) Veröffentlichungstag der Anmeldung: **09.02.1994**
(21) Anmeldenummer: 93111643.8
(22) Anmeldetag: 21.07.1993
(51) Int. Cl.: D06F 39/00, G05B 19/04, G05B 19/10

(54) **Steuerung oder Regelung für die Einstellung und/oder den Ablauf von Programmen, insbesondere Waschprogrammen bei Waschmaschinen**

(30) Priorität: 05.08.1992 DE 4225846
(71) Anmelder: BSG-Schalttechnik GmbH & Co. KG, D-72336 Balingen (DE)
(72) Erfinder: Izard, Ramon Valls, E-08193 Bellaterra, Barcelona (ES); Piazuelo, Carlos Valenti, Corbera de Llobregat, Barcelona (ES)
(74) Vertreter: Otte, Peter, Dipl.-Ing.

(57) **Zusammenfassung**

Bei einer Steuerung oder Regelung für die Einstellung und/oder den Ablauf von Programmen, insbesondere von Waschprogrammen bei Waschmaschinen wird die Kombination der folgenden Merkmale vorgeschlagen:
eine einen motorischen Antrieb umfassende Anzeigeeinrichtung (3) mit
einer elektronischen zeitbestimmenden Steuereinrichtung (12') die Arbeitskomponenten der von ihr gesteuerten Maschine ansteuert, sowie mit
einem der Anzeigevorrichtung (3) zugeordneten, signalbildenden Stellungsdecoder (9), der von ihm erzeugte Stellungssignale zur Steuereinrichtung rückführt und wobei
der motorische Antrieb (5) von der zeitbestimmenden Steuereinrichtung angesteuert ist und Anzeigevorrichtung (3) mit dem Stellungsdecoder (9) fest verbunden ist bei gleichzeitiger freier Verstellmöglichkeit von Anzeigevorrichtung/Stellungsdecoder gegenüber dem motorischen Antrieb.

## Beschreibung

### Stand der Technik

Die Erfindung geht aus von einer Steuerung oder Regelung nach dem Oberbegriff des Anspruchs 1.

Die nachfolgende Erläuterung des bekannten Stands der Technik geht speziell auf eine Waschmaschinenprogrammsteuerung ein, weil dies ebenfalls ein Hauptanwendungsgebiet vorliegender Erfindung darstellt, die allerdings auf die Anwendung bei Waschmaschinen nicht beschränkt ist.

So ist es besonders bei Waschmaschinen bekannt, verschiedene Waschprogramme, die eine Waschmaschine aufgrund einer vom Werk vorgegebenen Einstellung durchzuführen imstande ist, mittels eines von außen manuell verstellbaren Drehknopfes anzuwählen, der auf der Achse eines elektromechanischen Schrittschaltwerks oder sonstigen Antriebs sitzt. Über den gleichen Drehknopf wird dann von der Waschmaschine beispielsweise der momentane Zustand des jeweils gewählten Waschprogramms angezeigt, d.h., die Bedienungsperson ist in der Lage, sich darüber zu orientieren, in welcher Arbeitsphase sich die Waschmaschine im jeweiligen Augenblick befindet, also Vorwaschen, Hauptwaschgang, Schleudern, Spülen o.dgl.

Die Ansteuerung der jeweiligen Waschmaschinenkomponenten, also Motorsteuerung für Waschbewegung oder Schleudern in verschiedenen Gängen, Ansteuerung der Pumpe, der jeweiligen Ventile für das Einspülen von Wasser oder Waschmittel oder sonstigen Zusätzen u.dgl. erfolgt dabei meistens mittels einer elektromechanischen Schaltablauf-Steuerung, bei der ein kontinuierlich angetriebener und insofern auch das jeweils gewählte Waschmaschinenprogramm, auch in seiner Zeitsteuerung vorgebender Motor zu bestimmten Zeiten bestimmte Schalter öffnet oder schließt, die dann die erwähnten Waschmaschinenkomponenten ansteuern.

Diese Schalter können beispielsweise als Nockenschalter vorgesehen und um eine von dem Antriebsmotor kontinuierlich bewegte, Nocken zur Steuerung der Schalter aufweisende Welle angeordnet sein, auch in mehreren, zueinander versetzten Ebenen.

Es ist auch bekannt, für die Anwahl eines jeweiligen Waschprogramms und dessen Anzeige sowie für die Einstellung des jeweiligen Waschprogrammablaufs mehrere, beispielsweise zwei getrennte, von außen zugängliche, sich beispielsweise in der Frontfläche einer Waschmaschine befindliche Drehknöpfe oder sonstige manuelle Einstellmittel anzuordnen.

An einem der Drehknöpfe oder ach an Schaltern kann dann ein bestimmtes Waschprogramm ausgewählt werden, beispielsweise Standardprogramm für leicht verschmutzte Wäsche, während ein anderer Drehknopf durch seine sich selbsttätig jeweils verändernde Position den momentanen Stand des Waschprogramms angibt. Hier können auch durch manuellen Eingriff bestimmte Programmstufen überfahren oder schon durchgeführte Programmstufen wiederholt werden, beispielsweise ein Spül- oder Schleudervorgang.

Wesentlich ist jedenfalls, daß die Motorsteuerung für die Betätigung der einzelnen Schalt- und Ansteuervorgänge der einzige zeitbestimmende Faktor im Programmablauf der Waschmaschine ist, wobei ein solcher Motor an üblicher Netzversorgungsspannung liegt.

Der Erfindung liegt die Aufgabe zugrunde, bevorzugt für im Haushaltsbereich eingesetzte Geräte und Maschinen, insbesondere Waschmaschinen, Trockner, Küchenmaschinen u.dgl. eine im Aufbau einfache, andererseits vielfältigsten Anforderungen in Programmauswahl und Ablaufsteuerung gerecht werdende Steuerung oder Regelung zu schaffen, deren Anzeigeeinrichtung als von einer zentralen Logikschaltung, speziell Mikroprozessor, angesteuertes Stellglied arbeitet, welches aber andererseits in der Lage ist, bei manueller Betätigung von außen der zentralen Logikschaltung Steuerbefehle zu vermitteln.

### Vorteile der Erfindung

Die Erfindung löst diese Aufgabe mit den kennzeichnenden Merkmalen des Anspruchs 1 und hat den Vorteil, daß unter Verzicht auf die bisher eingesetzten elektromechanischen Schrittschaltwerke oder sonstigen Schaltablaufsteuerungen eine zentrale Logikschaltung,die üblicherweise ein Programme gespeichert enthaltender Mikroprozessor ist, für den gesamten Programmablauf sowie die Zeitsteuerung eingesetzt wird, andererseits aber das übliche Erscheinungsbild einer von außen zugänglichen Waschmaschinensteuerung aufrecht erhalten wird.

Zu diesem Zweck ist ein Stellungsdecoder vorgesehen, der von der zentralen Logikschaltung, die im folgenden lediglich noch als Mikroprozessor bezeichnet wird, ohne die Erfindung hierdurch einzuschränken, angesteuert ist und gleichzeitig und bevorzugt kontinuierlich dem Mikroprozessor seinerseits Stellungssignale in geschlossener Regelschleife rückführt, die den Mikroprozessor einmal darüber informieren, an welchem Punkt sich die von ihm durch ihre Zuordnung zum Stellungsdecoder angesteuerte Anzeigeeinrichtung befindet und ihm zum anderen Arbeitsbefehle und Anweisungen über den gleichen Stellungsdecoder vermittelt, wenn dieser von der Bedienungsperson von außen manuell betätigt wird.

Dabei ist der Mikroprozessor so ausgebildet, daß er zwischen solchen Positions- oder Stellungssignalen des Stellungsdecoders unterscheiden kann, die durch einen äußeren Bedienungsakt gleichzeitig als Befehle für die Wahl eines bestimmten Programms oder Unterprogramms auszuwerten und zu realisieren sind, und solchen Stellungssignalen, die lediglich der Verifizierung der richtigen Programmablaufanzeige an die Bedienungsperson dienen.

Das bedeutet mit anderen Worten, daß der Mikroprozessor sich in bestimmten Programmabläufen, die bei einem vorgegebenen Programm so und nicht anders ablaufen müssen, durch einen äußeren Eingriff nicht beirren läßt, sondern, wenn eine Verstellung erfolgt ist, durch entsprechende Ansteuerung des motorischen Antriebs für den Stellungsdecoder (und gleichzeitig die zuordnende Anzeigevorrichtung) den vorher angezeigten Wert wieder einnimmt (oder einen nächst folgenden, der sich aus dem entsprechenden Programmweiterlauf ergibt), während bei solchen ihm zugeführten, kodierten Stellungssignalen, die bestimmten Startpunkten von Programmen oder auch Unterprogrammen entsprechen, der Mikroprozessor diesen Arbeitsanweisungen folgt und an diesen Punkten mit seiner Programmsteuerung weiterarbeitet oder entsprechende Abläufe auch wiederholt.

Hierdurch ergibt sich der Vorteil, daß eine problemlose Programmablaufsteuerung mit einer beliebig großen Anzahl von vorgegebenen Programmen möglich ist, darüber hinaus die ständig nachgeführte Anzeige des jeweiligen momentanen Funktionsablaufs sichergestellt ist und zum dritten Eingriffe in den Programmablauf möglich sind. Dabei ist der Antrieb für den Stellungsdecoder und die Anzeigevorrichtung nicht an einen starren Zeitablauf gebunden, der sich aus Art und Aufbau des verwendeten Motors und dessen Untersetzung ergibt, sondern die Erfindung ermöglicht durch die innere kleine Regelschleife: Mikroprozessor steuert motorischen Antrieb an/motorischer Antrieb steuert Position des Stellungsdecoders/Stellungsdecoder liefert Stellungssignale an Mikroprozessor/Stellungsdecoder kann auch von außen manuell verstellt werden,-eine individuelle Anpassung an gewünschte Ablaufvorgänge und ein wesentlich verbessertes Zusammenspiel der einzelnen Komponenten mit ihren jeweiligen Rückmeldungen an den Mikroprozessor.

Es ergibt sich so eine Art Hybrid-Timer für eine Waschmaschinensteuerung, denn der Mikroprozessor als rein elektronisches logisches Schaltelement mit seinen verschiedensten Speichermöglichkeiten reagiert individuell und ohne Zeitverzögerung auf entsprechende Rückmeldungen, beispielsweise von Ventilen oder Wasserstandsmeldungen o.dgl., kann den weiteren Programmablauf bestimmen, steuert ohne starres Zeitschema Stellungsdecoder und Anzeigeeinrichtung an und nimmt über den Stellungsdecoder seinerseits Befehle entgegen, wenn diese in seinem Arbeitsablauf sozusagen "passen", was problemlos durch entsprechenden Vergleich mit gespeicherten Werten ermittelt werden kann.

Ein weiterer Vorteil bei vorliegender Erfindung besteht darin, daß der Stellungsdecoder in beliebiger Ausbildung gestaltet sein kann, wobei derzeit bevorzugt eine in etwa nach Art eines Potentiometers arbeitende Codierscheibe bevorzugt wird, die jeweiligen Kreisbögen folgend elektrisch leitende Segmente auf einer Trägerscheibe in beliebig codierbarer Verteilung aufweist, die von einer Vielzahl entsprechend die Kreissegmente abtastenden Schleifern erfaßt und als Stellungssignal, in digitaler Codierung oder analog, dem Mikroprozessor zuführt.

Vorteilhaft ist auch, daß die sonst bei elektromechanischen Schrittschaltwerken auftretenden Probleme wegfallen, beispielsweise also die für diese notwendigerweise erforderlichen kräftigen Antriebsmotoren, die Vielzahl der zum Einsatz kommenden Schalter und Schaltmimiken einschließlich Nockensteuerungen u.dgl., und anstelle solcher elektromechanischer, auch im benötigten Volumen anspruchsvollen Schaltsysteme hochgenau und mit beliebiger Auflösung arbeitende motorisch angetriebene Stellungsdecoder eingesetzt werden.

Stellungsdecoder sind in vielfachen Ausführungsformen bekannt; sie können beispielsweise in Form von Codierscheiben ausgebildet sein, die auf mechanischer Abtastung durch auf elektrisch leitenden Kreissegmenten schleifenden Schleiferzungen beruhen oder auf einer optischen Erfassung des jeweiligen Wegs, der bei einer Vielzahl von Stellungsdecodern ein Drehwinkel ist, wenn man rotatorische Systeme zugrunde legt. Stellungsdecoder können auch in Form von Näherungsschaltern auf kapazitiver, induktiver oder ebenfalls wieder lichtoptischer Basis ausgebildet sein, wobei letzten Endes jedes Potentiometer ein Stellungsdecoder ist, da ein entsprechend verändertes (analoges) Signal in Abhängigkeit zum Drehwinkel oder zum Verschiebeweg eines Potentiometers geliefert wird.

Beim Einsatz für vorliegende Erfindung ist ein solcher Stellungsdecoder insofern modifiziert verwendet, als seine Verstellung durch motorischen Antrieb, der wiederum vom Mikroprozessor oder Mikrocontroller angesteuert ist, erfolgt, also auch in seiner Zeitsteuerung von der elektronischen zentralen Logikschaltung ausgehend durchgeführt wird, wobei dann andererseits die zentrale Logikschaltung auch von sich aus die Lage oder Position (Drehwinkel) des Stellungsdecoders feststellen und sich (gegebenenfalls) danach richten kann. Die Ansteuerung des Stellungsdecoders erfolgt also sowohl durch manuelle Eingabe von außen, also durch die Bedienungsperson, als auch über die Ansteuerung des Motors, der den Stellungsdecoder in seiner Position verstellt. Dabei ist die Motoransteuerung der zentralen Steuerung unterworfen, während die Verdrehbarkeit einer üblicherweise vorhandenen Stellachse am Stellungsdecoder über einen Drehknopf von außen den Schnittstellenbereich Mensch/Maschine definiert und so Eingaben und Wünsche der Bedienungsperson aufnimmt.

Besonders vorteilhaft ist hierbei, daß über übliche Lebensdauern von Waschmaschinen gesehen ein Versagen oder eine Abnutzung solcher auch kostengünstigen Stellungsdecoder praktisch ausgeschlossen ist, da diese umfassend gekapselt sind bzw. jedenfalls gekapselt werden können und bei einer Verstellung des Stellungsdecoders über einen Drehknopf bei extrem geringer Reibung praktisch kein Verschleiß auftritt, vergleicht man dies mit sonst üblicherweise vorgesehenen elektromechanischen Schrittschaltwerken. Es kann daher sogar empfehlenswert sein, die Verstellung, beispielsweise auch über eine entsprechend feine Rasterung, etwas schwergängig zu gestalten; eine solche Rasterung kann mit Vorzug in den Bereich der ohnehin vorgesehenen Kupplung verlagert werden.

### Zeichnung

Ausführungsbeispiele der Erfindung sind in der Zeichnung dargestellt und werden in der nachfolgenden Beschreibung näher erläutert. Es zeigen:

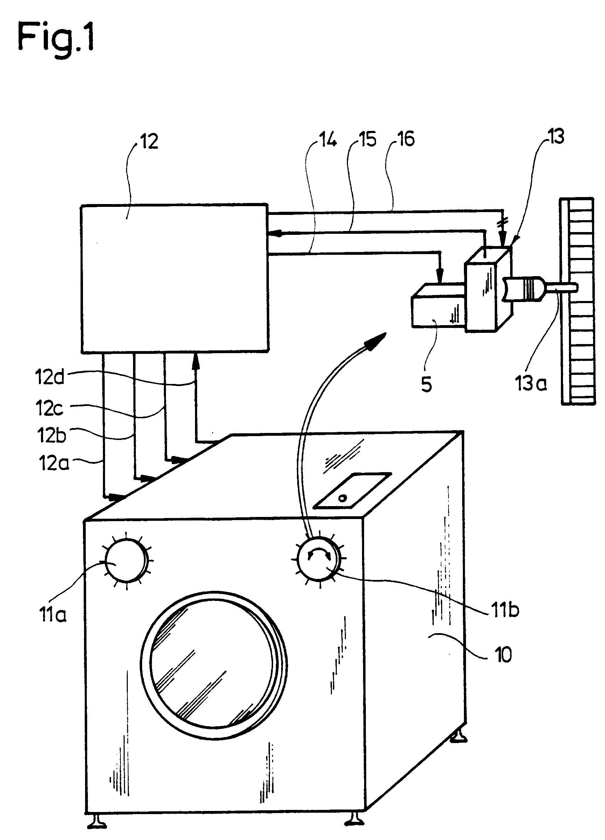

- Fig. 1: schematisiert als bevorzugtes Anwendungsbeispiel eine Waschmaschine mit zugeordneter Zentralsteuerung in erfindungsgemäßer Realisierung;
- Fig. 2: als bevorzugtes Ausführungsbeispiel die kompakte Anordnung der einzelnen, die erfindungsgemäße Steuerung/Regelung bildenden Schaltungskomponenten einschließlich des Stellungsdecoders in einem gemeinsamen Gehäuse im Schnitt und
- Fig. 3: eine Draufsicht auf die die wesentlichen elektronischen Bestandteile lagernde, im Gehäuse angeordnete Leiterplatte längs der Schnittlinie III-III der Fig. 2 und
- Fig. 4,: ebenfalls lediglich als bevorzugtes Ausführungsbeispiel eine mögliche Verteilung von Programmstart- und Stellungspositionen des Stellungsdecoders bei einer Waschmaschinensteuerung.

### Beschreibung der Ausführungsbeispiele

Ein Grundgedanke besteht darin, einem zur Antriebsregelung bei Waschmaschinen und sonstigen Haushaltsmaschinen vorgesehenen Mikroprozessor mit Anzeigeteil einen Bedienteil als Schnittstelle Mensch/Maschine in Form eines Steuerungsdecoders zuzuordnen und so auszubilden, daß sich eine optimale Anpassung an die Ansprüche beider Seiten ergibt und einwandfreie Einstellung und Anzeige mit hoher Funktionalität und Kostengünstigkeit verbunden werden kann.

In der Zeichnung ist die Waschmaschine, die von allgemeiner üblicher Konfiguration sein kann, mit 10 bezeichnet; sie verfügt über mindestens einen, gegebenenfalls aber auch über zwei von außen einer Einstellung und Anzeige zugängliche Drehknöpfe oder sonstige Betätigungselemente, die mit 11a und 11b bezeichnet sind.

Auf weitere Einzelheiten der Waschmaschinenausbildung selbst braucht nicht eingegangen zu werden, da diese nicht Gegenstand der Erfindung sind. An geeigneter Stelle ist eine Zentralsteuerung 12, bevorzugt als Mikroprozessor ausgebildet, vorgesehen, die unter Ausnutzung von gespeicherten Daten, Programmen und sonstigen Angaben den Betrieb der Waschmaschine regelt, und zwar in Abhängigkeit und nach Maßgabe der von einer jeweiligen Bedienungsperson vorgenommenen äußeren Einstellung und entsprechender innerer Programmabläufe.

Die zentrale Logiksteuerung 12 beispielsweise in Form eines eine Vielzahl von Programmen je nach Wunsch enthaltenden Mikroprozessors arbeitet über eine beliebige Vielzahl von Verbindungsleitungen 12a, 12b, 12c auf die jeweiligen Waschmaschinen-Arbeitskomponenten, also Antriebsmotor, Ventile, Einspülsteuerungen u. dgl. und erhält von beliebigen Sensoren oder Meldern über eine weitere Verbindungsleitung 12d Informationen über bestimmte, von ihr gesteuerte oder geregelte Istwerte, beispielsweise über die Höhe des Wasserstandes von einem Niveaumelder zugeführt.

Ein weiteres Bauteil umfaßt, vorzugsweise in einem gemeinsamen Gehäuse 13 angeordnet, einen Antriebsmotor 5, beispielsweise Synchronmotor oder Schrittmotor, von dem Antriebsmotor 5 angetrieben im Gehäuse 13 einen Stellungsdecoder 9, eine Kupplung 1 sowie, an einer nach außen ragenden Welle 13a befestigt, ein äußeres Stellrad 3 zur Anzeige und Programmauswahl (siehe auch

die Darstellungen 2 und 3). Der Antriebsmotor 5 ist über eine Verbindungsleitung 14 von der zentralen Logikschaltung 12 angesteuert, die über eine Rückleitung 15 - bei allen Leitungen kann es sich natürlich auch um Mehrfachleitungen handeln - vom Stellungsdecoder Stellungssignale zugeführt erhält. Dabei können auch weitere Verbindungsleitungen 16 zur Realisierung beliebiger Aufgaben vorgesehen sein. Bevorzugt befindet sich im übrigen die zentrale Logikschaltung 12 in Form eines Mikroprozessors ebenfalls innerhalb des Gehäuses 13 auf einer dort angeordneten Leiterplatte, die ebenfalls bevorzugt gleichzeitig die Komponenten für den Stellungsdecoder lagert.

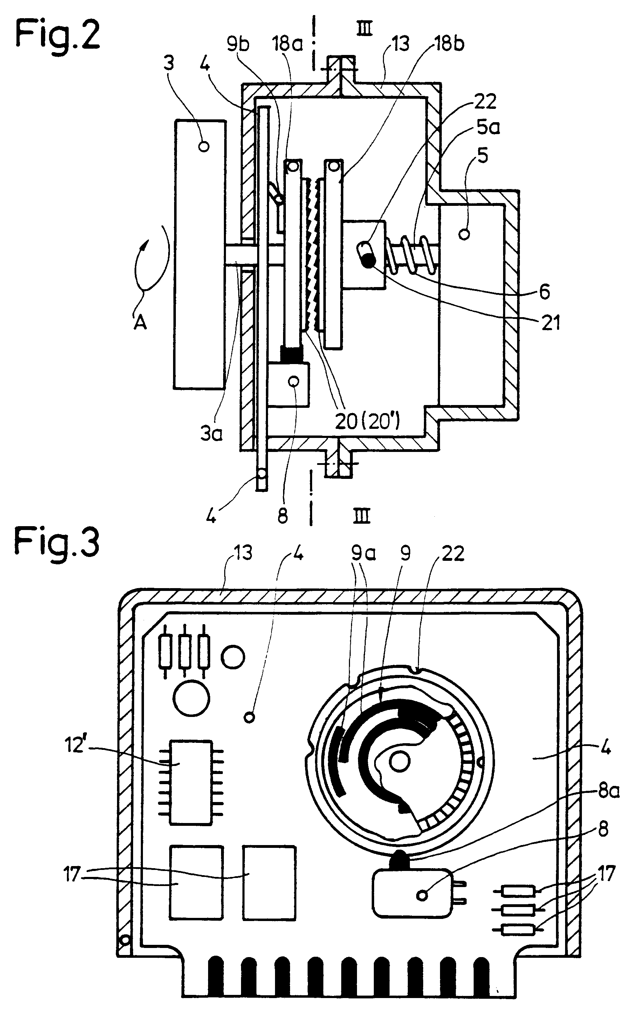

Bevor anhand der Darstellungen der Figuren 2, 3 und 4 genauer auf den die Erfindung betreffenden Steuer/Regelungsbereich eingegangen wird, wird nochmals darauf hingewiesen, daß es sich bei der Erläuterung der vorgestellten Detaillösung lediglich um ein bevorzugtes Ausführungsbeispiel handelt, welches auch in seiner Anwendung auf die Steuerung oder Regelung einer Waschmaschine nicht beschränkt ist.

Innerhalb des Gehäuses 13 in Fig. 2 befindet sich, von der Lagerwelle 3a für das äußere Stellrad durchsetzt, eine Leiter- oder Trägerplatte 4, die in Fig.3 nochmals in Draufsicht dargestellt ist und die hauptsächlichsten Komponenten der elektronischen Regelung sowie bevorzugt auch den Stellungsdecoder, zumindest Teile davon, lagert.

Aus Zweckmäßigkeitsgründen, weil nämlich die Verstellung über den Antriebsmotor 5 durch eine Verdrehung von dessen Ausgangswelle 5a erfolgt, ist der Stellungsdecoder für eine rotatorische Positionsänderung ausgelegt, erfaßt also jeweils Drehwinkel und erzeugt entsprechende Ausgangssignale zur zentralen Logikschaltung, die in Fig. 3 als Mikroprozessor 12' mit weiterer peripherer Beschaltung 17 dargestellt ist. Eine bevorzugte Ausführungsform des Stellungsdecoders besteht darin, daß unmittelbar auf der Leiterplatte 4, die insofern den Kodierungsträger bildet, elektrisch leitende, zueinander konzentrische Kreissegmente 9a des Stellungsdecoders 9 angeordnet sind, wobei diese Kreissegmente bevorzugt unmittelbar als ohnehin notwendiger Teil der Flachleitungen (Kupferkaschierungen) der Leiterplatte 4 ausgebildet sind und daher auch sofort einen entsprechenden elektrischen Anschluß zum Mikroprozessor 12' oder zu anderen Bauelementen finden.

Die Kreissegmente 9a können in beliebiger Codierung, beispielsweise im sogenannten Graycode angeordnet sein. Ein solcher Stellungsdecoder wird vervollständigt durch einen Codierungsabnehmer 9b, bevorzugt in Form eines mehrfingrigen und damit auf jedem der Kreissegmente schleifenden Schleifer, der von einer Trägerscheibe 18a gelagert ist, die verdrehbar oberhalb der Codierungssegmente angeordnet ist.

Angetrieben wird die Trägerscheibe 18a für den Codierungsabnehmer 9b des Stellungsdecoders von der Ausgangswelle 5a des Antriebsmotors 5, und zwar über eine zwischengefügte Kupplung 1, die sich am besten aus der Darstellung der Fig. 2 erkennen läßt.

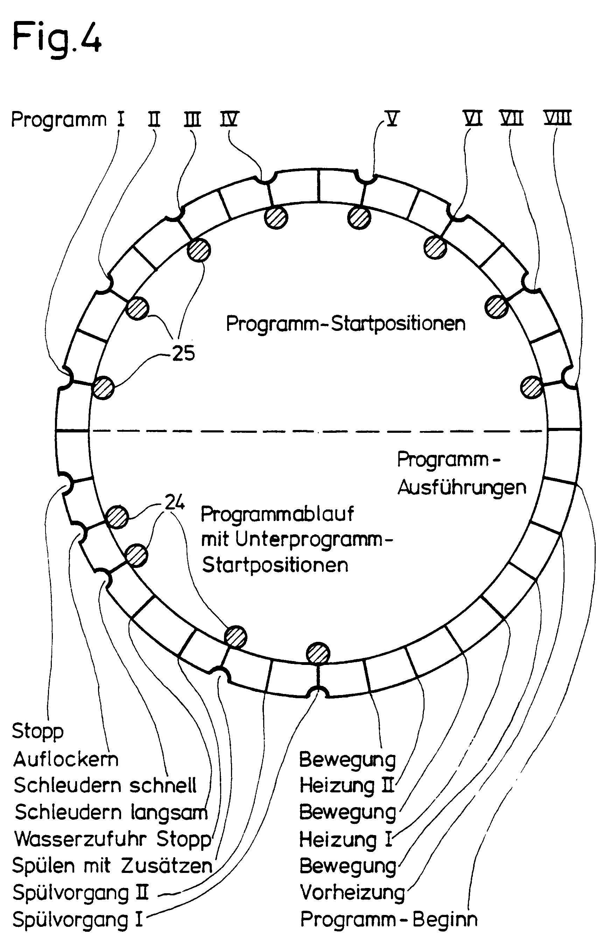

Dabei ist die Trägerscheibe 18a fest mit dem äußeren Stellrad 3 für die Programmauswahl und die gleichzeitige Programm-Zustandsanzeige verbunden, so daß dem Mikroprozessor 12' vom Stellungsdecoder 9 grundsätzlich die Befehle über das äußere Stellrad 3 in entsprechend der Codierung vom Stellungsdecoder zugeführt werden, die auch das äußere Stellred 3 anzeigt bzw. die vom Stellrad 3 gewährleistete Anzeige (vgl. Fig. 4) ist fest einem jeweiligen Stellungswinkel und damit einer entsprechenden Codierungsposition des Stellungsdecoders zugeordnet.

Zur Realisierung der Kupplung 1 ist die Trägerscheibe 18a auf der zum Codierungsbereich abgewandten Seite mit einer entsprechend ausgebildeten Stirnverzahnung 20 versehen, die mit einer Gegenverzahnung 20' kämmt, die ihrerseits von einer zweiten Kupplungsrasterscheibe 18b getragen ist. Die Trägerscheibe 18a bildet daher gleichzeitig eine erste Kupplungsrasterscheibe, wobei die beiden Kupplungsscheiben dadurch einen lösbaren Eingriff bilden, daß die Kupplungsrasterscheibe 18b von einer Vorspannungsfeder 6 mit ihrer Verzahnung auf die Verzahnung 20 der Trägerscheibe 18a gepreßt wird.

Je nachdem, wie die gegenseitigen Verzahnungen 20, 20' der Kupplungsrasterscheiben ausgebildet sind - entweder symmetrisch verzahnt oder entsprechende Schrägverzahnung -, ist eine freie Durchdrehbark eit bei manueller Verstellung am Stellrad 3 in beiden Richtungen möglich, indem die Zähne je nach aufgewendeter Kraft und gegen den Druck der Vorspannungsfeder 6 jeweils ausgehoben werden, oder nur in einer Richtung, wenn die Verzahnung so ausgebildet ist, daß in der anderen Richtung eine Blockade erfolgt.

Bei dem in Fig. 2 dargestellten Ausführungsbeispiel ist die zweite Möglichkeit bevorzugt - man kann das Stellrad 3 also nur in einer Richtung durchdrehen, in welcher sich die dem Motor zugewandte Kupplungsrasterscheibe 18b von der Trägerscheibe 18a gegen den Federdruck lösen kann. In der anderen Richtung wird die motorseitige Kupplungsrasterscheibe 18b von der Verzahnung bis zu einem Anschlag mitgenommen, bei welchem ein Verriegelungszapfen 21 in einem Langloch 22 einer einstückig an der Kupplungsrasterscheibe 18b angeordneten Hülse bis zum Lochgrund wandert und dann eine weitere Verdrehung arretiert. Bei einer solchen Relativverdrehung der Trägerscheibe 18a gegenüber der sich nur innerhalb des Langloch-Freigangs bewegenden Kupplungsrasterscheibe 18b ist auf jeden Fall eine völlige Blockierung der Motorausgangswelle 5a gewährleistet, und zwar über das bei Verwendung eines Synchronmotors zwischengeschaltete Getriebe mit sehr hoher Untersetzung.

Es versteht sich natürlich, daß dann, wenn der motorische Antrieb für die Trägerscheibe 18a entsprechend leichtgängig ist, von einer Zwischenkupplung auch abgesehen werden kann. Über die zum Mikroprozessor 12a rückgemeldete Position des Stellungsdecoders weiß dieser stets, in welcher Winkelposition sich das Stellrad 3 befindet und kann dann durch entsprechende Ansteuerung des Antriebs in die jeweils gewünschte Position einfahren oder aus dieser heraus ein gewünschtes Unterprogramm starten.

Durch die Anordnung der Kupplung und bei entsprechender Zahnausbildung mit jeweils in einer Richtung steil ansteigenden und in der anderen Richtung allmählich abfallenden Flanken ergibt sich jedenfalls in der vorgegebenen Drehrichtung entsprechend dem Pfeil A in Fig. 2 ein starkes Mitnahmemoment, gewährleistet auch durch die hohe Untersetzung des Antriebs-Synchronmotors, so daß von der Trägerscheibe 18a auch noch beliebige andere Schaltungen vorgenommen werden können, indem diese randseitig Nocken 22 (oder auch Vorsprünge) aufweist, die Schalterbetätigungselemente 8a von um die Trägerscheibe 18a auf der Leiterplatte 4 angeordneten Schaltern, bevorzugt Mikroschaltern 8 betätigen (Fig.3).

Hierdurch ergibt sich auch, falls gewünscht, die Möglichkeit einer mechanischen Indexierung. In diesem Zusammenhang ist es aber auch möglich, zusätzlich zu der einen Trägerscheibe 18a noch weitere Schalt-, Nocken- oder Betätigungsscheiben oder -elemente anzuordnen in anderen Ebenen, so daß von dem einen Stellungsdecoder bzw. seinen jeweiligen Komponenten noch eine Vielzahl weiterer Schaltungen vorgenommen werden können.

Man erkennt, daß der motorische Antrieb 4 für die Untereinheit Stellrad 3/Stellungsdecoder 9 in geschlossener Regelschleife vom Mikroprozessor 12 als digitales Positioniersystem angesteuert ist, wobei durch die Codierung die jeweilige Position des Stellrades 3 dem Mikroprozessor in jeder Programmsituation bekannt ist.

Dabei kann es empfehlenswert sein, die jeweils vom Stellungsdecoder gelieferte Position in einem Zwischenspeicher abzulegen, der entsprechend den durchgeführten Arbeitsstufen des Waschprogramms modifiziert wird, so daß ein Benutzer jederzeit erkennen kann, an welcher Stelle sich das von ihm ausgewählte Waschprogramm befindet bzw. der Mikroprozessor bei versehentlicher Verstellung seine jeweilige Programm-Arbeitsposition wiederfindet.

Auch wenn das Stellrad 3 daher bewußt oder unbewußt von Hand aus der angezeigten Position bewegt wird, erkennt dies der Mikroprozessor sofort durch Vergleich der vorher gespeicherten Position mit dem neuen Codierungswert und steuert dann den Antrieb 5 - beispielsweise unter Zurücklegung zunächst einer vollständigen Umdrehung - so an, daß die voreingenommene Position wieder erreicht wird.

In einer bevorzugten Ausgestaltung vorliegender Erfindung erfolgt eine solche Reaktion allerdings dann nicht, wenn der Eingriff bewußt von der Bedienungsperson vorgenommen worden ist durch Verdrehung des Stellrades, um entweder ein neues Waschprogramm einzuleiten oder bestimmte Unterprogramme oder Waschvorgänge nochmals durchführen zu lassen oder auch zu überspringen.

Es versteht sich zu diesem Zweck, daß der Mikroprozessor 12' eine Vielzahl von überhaupt möglichen Programmen in ihren Abläufen gespeichert enthält - so zeigt beispielsweise die Fig. 4 die Möglichkeit, durch eine Bedienungsperson über entsprechende Startpositionen in der Stellradbetätigung acht Programme einstellen zu können. Immer wenn dem Mikroprozessor daher ein Codierungswert zugeführt wird, der einem dieser acht Startpositionen (und sonstigen Unterprogramm-Startpositionen) entspricht; hierauf wird weiter unten noch eingegangen,-wird die empfangene neue Programm-Startposition mehrfach überprüft, beispielsweise für eine vorgegebene Zeitdauer festgestellt, ob der gleiche codierte Eingangswert beibehalten wird; ist dies der Fall und entspricht dieser jetzt empfangene Codierungswert einer der programmiert vorliegenden Startpositionen für Programm- oder Unterprogramm, dann beginnt der Mikroprozessor 12' mit dem Ablauf dieses Programms, fährt also den Anzeigepfeil des Stellrads auf die Position "Programm-Beginn", wie in Fig.4 dargestellt; bei allen anderen Verstellungen wird das Stellrad auf die Stopp-Position zurückgeführt.

Damit von der Bedienungsperson auch während eines Programmablaufs Eingabewünsche geäußert und vom Mikroprozessor 12a realisiert werden, sind, wie Fig. 4 zeigt, weitere Unterprogramm-Startpunkte 24 zusätzlich zu den Programm-Startpositionen 25 vorgesehen. Stellt die Bedienungsperson beispielsweise, auch während eines Programmablaufs, das äußere Stellrad 3 auf einen dieser Unterprogramm-Startpunkte 24, beispielsweise wenn nach schnellem Schleudern aus irgendwelchen Gründen nochmals mit dem Spülvorgang II angefangen werden soll, dann vergleicht der Mikroprozessor 12' die von ihm soeben empfangene Codierung mit seinen gespeicherten Informationen und stellt fest, daß es sich hierbei um einen gültigen Eingabebefehl der Bedienungsperson handelt. Daraufhin wird mit dem Spülvorgang II nochmals begonnen (Fig. 4).

Andererseits verweigert der Mikroprozessor 12' Stellradverstellungen dann, wenn diese aus Arbeitspositionen heraus oder in Arbeitspositionen erfolgen, die einen unter diesen Umständen sinnlosen Programmablauf zur Folge hätten, also dann, wenn etwa aus der Vorheizungs-Position auf die zweite Hauptheizungsposition "Heizung II" verstellt wird. In diesem Fall akzeptiert der Mikroprozessor den Eingabebefehl nicht, sondern steuert den Antrieb 5 so an, daß wieder in die ursprüngliche Ausgangsposition der Stellradanzeige zurückgefahren wird,und setzt das Programm weiter fort.

Es versteht sich, daß hier noch eine Vielzahl anderer Lösungsschritte und Zwischenlösungen möglich sind; so kann der Mikroprozessor auch verriegeln, wenn von einem ursprünglich angewählten Programm IV auf ein Programm VII übergegangen wird. Es empfiehlt sich daher auch, den Mikroprozessor 12' so auszubilden und zu programmieren, daß dann, wenn eine Hauptprogramm-Startposition 25 eingestellt worden ist, die weitere Annahme von Hauptprogramm-Startpositionen verriegelt wird und von einem Typ I-Programmbereich auf einen Typ II-Programmbereich übergegangen wird, der den Programmablauf, also die Durchführung des jeweiligen Programms betrifft.

Es ist auch möglich, zwei miteinander korrelierte Codierungen zum Starten jedes Programms zu benutzen oder man kann Doppelwinkelabschnitte für die Typ I-Programmpositionen benutzen, wodurch mehr Positionen für die Programmdurchführung verfügbar werden.

Es ist auch möglich, den Stellungsdecoder insgesamt doppel- oder mehrstöckig auszubilden oder jede beliebige Art der Codierung bis zu hoher Winkelauflösung zu wählen.

Eine Alternative zum Gesichtspunkt der "Zeitbestimmung" im Waschprogrammablauf kann auch darin bestehen, daß anstelle der bisher erläuterten intermittierenden Verstellung des Stellrades sowie des mit diesem fest verbundenen Stellungsdecoders das Stellrad sehr langsam, sozusagen kontinuierlich verstellt wird, beispielsweise um die Durchführung langer Zwischenarbeitsabfolgen im Programm anzuzeigen, beispielsweise wenn der Programmanlauf mit einer gewünschten vorgegebenen Zeitverzögerung (Ausnutzung von Nachtstrom beispielsweise) erfolgen soll oder es sich um die Anzeige von Trocknungszeiten handelt. Diese Möglichkeit besteht darin, daß der Antriebsmotor 5 während jeweils einer vorgegebenen Zeitdauer (beispielsweise Minuten) immer nur für einige Sekunden oder Zehntelsekunden vom Mikroprozessor 12' angesteuert wird, was bedeutet, daß sich das Stellrad mit äußerst geringer Geschwindigkeit verdreht. Der Mikroprozessor 12' gibt hierdurch sozusagen die von ihm realisierte Zeitsteuerung an den Motor ab und benutzt den Stellungsdecoder, um festzustellen, wo sich das Waschprogramm befindet bzw. wann ein entsprechender Arbeitsschritt beendet ist. Auf diese Weise, die sich beispielsweise durch Umschaltung der Mikroprozessor-Arbeitsweise von außen realisieren läßt, können auch Zwischenpositionen bei einem Waschschritt ausgewählt werden, und es ist möglich, Bruchteile eines jeweiligen Arbeitsschrittes zu realisieren.

Falls gewünscht ist, daß am Stellrad neben dem jeweiligen Programmablauf auch von der Bedienungsperson erkannt wird, mit welchem Programm I bis VIII (lediglich als Beispiel) die Waschmaschine in diesem Moment arbeitet, können zusätzliche Hauptprogramm-Anzeigeeinrichtungen vorgesehen sein. So ist es beispielsweise möglich, dann, wenn man nur ein Stellrad 3 für die Programmauswahl und die gleichzeitige Programmzustandsanzeige vorsehen möchte, das jeweils ausgewählte Hauptprogramm I bis VIII durch eine optische Markierung bleibend kenntlich zu halten, etwa durch die Anordnung von Leuchtdioden im Stellrad angrenzend zu den Hauptprogrammbereichen. Das jeweils ausgewählte Hauptprogramm wird dann durch eine erleuchtet bleibende Leuchtdiode angezeigt, die sich mit dem Stellrad dreht, welches den Programmablauf durch seine Drehbewegung anzeigt.

Abschließend wird darauf hingewiesen, daß die Ansprüche und insbesondere der Hauptanspruch Formulierungsversuche der Erfindung ohne umfassende Kenntnis des Stands der Technik und daher ohne einschränkende Präjudiz sind. Daher bleibt es vorbehalten, alle in der Beschreibung, den Ansprüchen und der Zeichnung dargestellten Merkmale sowohl einzeln für sich als auch in beliebiger Kombination miteinander als erfindungswesentlich anzusehen und in den Ansprüchen niederzulegen sowie den Hauptanspruch in seinem Merkmalsgehalt zu reduzieren.

## Patentansprüche

1. Steuerung oder Regelung für die Einstellung und/oder den Ablauf von Programmen, insbesondere von Waschprogrammen bei Waschmaschinen, Trocknungsvorgängen bei Trocknern und Programmabläufen bei sonstigen Haushaltsgeräten, gekennzeichnet durch die Kombination
a) einer einen motorischen Antrieb (Schritt- oder Synchronmotor) umfassenden Anzeigeeinrichtung (Stellrad 3) mit
b) einer elektronischen zeitbestimmenden Steuereinrichtung (Mikroprozessor 12' ), die mindestens einen, ein Programm oder Programmablauf gespeichert enthaltenden Speicherbereich aufweist und im Ablauf des jeweiligen Programms die entsprechenden Arbeitskomponenten der von ihr gesteuerten Maschine (Motoren, Ventile u.dgl.) ansteuert, sowie
c) eines der Anzeigevorrichtung (Stellrad 3) zugeordneten, deren Zustandsänderung (Bewegungsablauf) erfassenden, signalbildenden Stellungsdecoders (9), der von ihm erzeugte Stellungssignale zur Steuereinrichtung (Mikroprozessor 12a) rückführt und wobei
d) der motorische Antrieb (5) für die Anzeigevorrichtung (Stellrad 3) mit deren Stellungsdecoder (9) von der zeitbestimmenden Steuereinrichtung unter Berücksichtigung der rückgeführten Stellungssignale angesteuert ist und
e) Anzeigevorrichtung (Stellrad 3) mit dem Stellungsdecoder (9) fest verbunden ist bei gleichzeitiger freien Verstellmöglichkeit von Anzeigevorrichtung/Stellungsdecoder gegenüber deren motorischen Antrieb (5) bei einer Manipulation von außen durch eine Bedienungsperson derart, daß der Stellungsdecoder gleichzeitig - als Schnittstelle Mensch/Maschine - Programmfunktions-Auswahlsignale erzeugt und der Steuereinrichtung zur Initialisierung von Programmen oder Programmabläufen zuführt.

2. Steuerung oder Regelung nach Anspruch 1, dadurch gekennzeichnet, daß zwischen motorischem Antrieb (5) einerseits und als Stellrad (3) ausgebildeter Anzeigevorrichtung mit gleichzeitig angetriebenem Stellungsdecocder (9) eine Kupplung angeordnet ist, die eine relative Verdrehung von Stellrad (3) und Stellungsdecoder (9) gegenüber der Motorausgangswelle (5a) des motorischen Antriebs (5) ermöglicht.

3. Steuerung oder Regelung nach Anspruch 1 oder 2, dadurch gekennzeichnet, daß die zeitbestimmende zentrale Steuereinrichtung ein Mikroprozessor (12a) ist, der den ihm vom Stellungsdecoder jeweils zugeführten momentanen Decodierwert in einem Zwischenspeicher (RAM) mindestens so lange gespeichert enthält, bis durch Fortschaltung im Programmablauf ein neuer Speicherwert angefahren ist.

4. Steuerung oder Regelung nach einem der Ansprüche 1-3, dadurch gekennzeichnet, daß der Stellungsdecoder den jeweiligen Weg oder Drehwinkel der Anzeigevorrichtung (Stellrad 3) in codierter Form erfaßt und dem Mikroprozessor (12a) zuführt.

5. Steuerung oder Regelung nach Anspruch 4, dadurch gekennzeichnet, daß der Stellungsdecoder die jeweilige Programmposition optisch, induktiv, kapazitiv oder mechanisch erfaßt und in entsprechende momentane Codierungswerte umsetzt.

6. Steuerung oder Regelung nach Anspruch 4 oder 5, dadurch gekennzeichnet, daß der Stellungsdecoder elektrisch leitende, zueinander konzentrische Kreissegmente umfaßt, die von einem mit dem Stellrad (3) verdrehbaren Codierungsabnehmer kontaktiert sind.

7. Steuerung oder Regelung nach Anspruch 6, dadurch gekennzeichnet, daß die elektrisch leitenden konzentrischen Kreissegmente in konzentrischer Codeverteilung als Leiterbahnen auf einer Leiterplatte (4) als Codierungsträger angeordnet sind, die auch den Mikroprozessor (12') lagert und daß an einer den Codierungsabnehmer als Schleifer (9b) lagernden Trägerscheibe (8a) zur Erzeugung weiterer Stellungssignale Nocken oder Vorsprünge angeordnet sind, die mindestens einen um ihren Rand angeordneten (Mikro)Schalter (8a) betätigen, wodurch gegebenenfalls gleichzeitig eine mechanische Positionsindexierung von Stellrad (3) und Tragscheibe (18a) des Stellungsdecoders (9) erreicht wird.

8. Steuerung oder Regelung nach einem der Ansprüche 2-7, dadurch gekennzeichnet, daß die den Stellungsdecoder (9) mit Stellrad (3) mit dem motorischen Antrieb (5) verbindende Kupplung von der Trägerscheibe (18a) des Stellungsdecoders und einer weiteren Kupplungsrasterscheibe (18b) gebildet ist, die jeweils aufeinander gerichtete Verzahnungen (20, 20') aufweisen, wobei die Kupplungsrasterscheibe (18b) durch Federvorspannung zum Eingriff in die Verzahnung der Trägerscheibe (18a) gedrückt ist.

9. Steuerung oder Regelung nach Anspruch 8, dadurch gekennzeichnet, daß die Kupplung aus Trägerscheibe (18a) und Kupplungsrasterscheibe (18b) mit ihren gegenseitigen Verzahnungen (20, 20') so ausgebildet ist, daß ein freies Durchdrehen des Stellrads (3) lediglich unidirektional möglich ist bei einer durch eine Langloch/Zapfenverbindung (21, 22) gewährleisteten Hubverstellung einer der Kupplungsscheiben gegen eine die eingekuppelte Position sicherstellende Vorspannung einer Vorspannungsfeder (6).

10. Steuerung oder Regelung nach einem der Ansprüche 1-9, dadurch gekennzeichnet, daß der Speicher des Mikroprozessors (12') eine vorgegebene Anzahl von durch ihre Codierung unterscheidbaren Startpositionen für Hauptwaschprogramme (Programm I bis VIII) enthält sowie eine vorgegebene Anzahl von weiteren Startpositionen für die Durchführung von Unterprogrammen, wobei jede dieser Startpositionen vom Mikroprozessor (12a) als externer, gültiger Eingabebefehl interpretiert und im Ablauf realisiert wird und einer weiteren Ausbildung der Mikroprozessor-Speicherung derart, daß willkürliche Stellradverdrehungen ohne Einstellen auf vorgegebene Startpositionen vom Mikroprozessor bei der Durchführung seines Programmablaufs zurückgewiesen werden.
